# EUROPEAN PATENT APPLICATION

(11) **EP 1 864 775 A1**
(43) Date of publication of application: **12.12.2007**
(21) Application number: 06730287.7
(22) Date of filing: 28.03.2006
(51) Int. Cl.: B29B 7/38, B29B 9/16, C08J 3/20

(54) **METHOD OF PRODUCING CARBON MICROFIBER-CONTAINING RESIN COMPOSITION**

(30) Priority: 31.03.2005 JP 2005104457
(71) Applicant: Bussan Nanotech Research Institute Inc., Tokyo 100-0004 (JP)
(72) Inventor: HANDA, Koichi Bussan Nanotech Research, Chiyoda-ku Tokyo 1000004 (JP); Subiantoro c/o Bussan Nanotech Research, Chiyoda-ku Tokyo 100004 (JP); GOTOH, Yoshihisa c/o Bussan Chemicals Co., Ltd., Chuo-ku, Tokyo 1030027 (JP); FUKAMI, Akira Tsubakuro Chemical Industry Co., Ltd, Ohta-ku Tokyo 144004 6 (JP); NAITO, Y. Tsubakuro Chemical Industry Co.,Ltd., Tokyo 1440046 (JP)
(74) Representative: Brykman, Georges
(86) International application number: PCT/JP2006/306339
(87) International publication number: WO 2006/106691

(57) **Abstract**

In a method for manufacturing fine carbon fiber-containing resin composition, which comprises throwing fine carbon fibers and a thermoplastic resin into a kneading extruder and kneading them in the extruder to prepare the fine carbon fiber-containing resin composition in which the fine carbon fibers are dispersively blended in the thermoplastic resin,
the thermoplastic resin is thrown from a main supply port of the kneading extruder, and the fine carbon fibers are thrown from a secondary supply port which is communicated to a part of pathway in a screw barrel of the kneading extruder so that the fine carbon fibers are mixed to the thermoplastic resin which was thrown in advance and have traveled along the screw barrel of the kneading extruder and comes to its fused state;
a cylinder temperature of the kneading extruder is set to a temperature at which the melt flow index of the thermoplastic resin under loading of 2.16 Kg in accordance with the Japanese Industrial Standard K 7210 (JIS K 7210) sets in a range of 10 - 30; and
the residence time of the fine carbon fiber-containing resin composition in the kneading extruder and the shearing rate of a screw segment of the kneading extruder to the fine carbon fiber-containing resin composition set in a range of 25 - 100 seconds, and in a range of 10000 - 30000/sec. , respectively.

## Description

### TECHNICAL FIELD

This invention is related to a method for manufacturing fine carbon fiber-containing resin composition, in which the fine carbon fibers are dispersed uniformly in the thermoplastic resin with a stable mixing ratio, and the resin composition has outstanding physical properties such as excellent electrical conductivity.

### BACKGROUND ART

Since the thermoplastic resin possesses an excellent molding characteristic as well as relatively good mechanical strength and thermal characteristic, it has been used widely for various applications.

On the other hand, the thermoplastic resin shows a low electrical conductivity in general. In order to improve the conductivity, or to enhance a mechanical strength or a thermal strength, it has been also practiced to make the thermoplastic resin into a composite material by mixing a filler.

For instance, carbon black, carbon fiber, metal fiber, and metallic powder, etc. have been used as an electro-conductive filler to be mixed with the thermoplastic resin.

However, in order to attain a high electrical conductivity by addition of the above-mentioned electro-conductive filler to the thermoplastic resin, a large additive amount, for example, about 20 % by weight based on the weight of resin would be necessitated, and thus the mechanical characteristic and molding characteristic of the thermoplastic resin per se were deteriorated when the filler was added at such a large additive amount.

In recent years, fine carbon fibers, which are represented by carbon nanotubes and a fiber diameter of which is thinned down to 0.5 - 100 nm, have been developed. Because of their excellent electrical conductivity, a large aspect ratio, and a large number of the carbon fibers per a unit weight, it is expected to give a good electrical conductivity to the resin even at a relatively small additive amount.

However, because the fine carbon fibers are minor, it was difficult to blend the fine carbon fibers to the thermoplastic resin and to fill the thermoplastic resin with the fine carbon fibers. In addition, because the fine carbon fibers are easy to aggregate together, an extrusion condition of becoming a high shearing speed is needed to disperse the fine carbon fibers in the thermoplastic resin uniformly. Therefore, the fine carbon fibers are cut by the shearing force on kneading, and prescribed electrical conductivity can not be attained occasionally.

Moreover, in Patent Literature 1, it is disclosed that aggregates, each of which is composed of mutually entangled fine carbon fibers having 3.5 - 70 nm in diameter, and has a mean diameter in the range of 0.1 to 50 µm, are added to a thermoplastic resin, in order to solve the above-mentioned difficulty on the dispersive blending of the fine carbon fibers into the thermoplastic resin.

In Patent Literature 1, any blending and kneading conditions, etc. , of the aggregates to the thermoplastic resin are not particularly disclosed, and thus, the problem for cutting of the fine carbon fibers by the shearing force on kneading as above mentioned still remains. Further, since the fine carbon fibers are dispersed into the thermoplastic resin in the form of aggregates, the electric characteristic of the fine carbon fibers per se can not be utilized adequately. In addition, there is a fear that an area specific variation in electrical resistivity and a degression in mechanical strength due to the presence of coarsely dispersed regions as weak points will arise.

In general, the thermoplastic resin as a raw material will be often provided in the shape of pellets or flakes, etc. , other than the powder form. When the thermoplastic resin in the state of such a large particle's form is kneaded with fine carbon fibers, the uniform dispersive blending of the fine carbon can not be expected. In addition, because of the possibility of giving a large shearing force to the fine carbon fibers on contact with such large particles of the thermoplastic resin, there is a fear that damages such as cutting of fine carbon fibers will arise an area specific variation in electrical resistivity and a degression in mechanical strength due to the presence of coarsely dispersed regions as weak points will arise.
Patent Literature 1: Japanese Patent Unexamined Publication HEI 7 - 102112 (JP HEI 7(1995) - 102112 A)

### DISCLOSURE OF INVENTION

### PROBLEM TO BE SOLVED BY THE INVENTION

Therefore, this invention aims to provide a method for manufacturing fine carbon fiber-containing resin composition, where the fine carbon fibers can be dispersed uniformly in the thermoplastic resin, while the characteristics of the fine carbon fibers are maintained.

### MEANS FOR SOLVING THE PROBLEM

As a result of our diligent study for solving the above problems, we, the inventors, has found that on the production of the carbon fiber-containing resin composition by throwing fine carbon fibers and a thermoplastic resin into a kneading extruder and kneading them in the extruder, a fine carbon fiber-containing resin composition, where the fine carbon fibers can be dispersed uniformly while the fine carbon fibers maintain their own shape and which possesses superior characteristics, such as electrical conductivity, can be provided, in the case that the thermoplastic resin and the fine carbon fibers are not supplied simultaneously as in their powdery forms, but the thermoplastic resin is only thrown from a main supply port into the kneading extruder, while the fine carbon fibers are thrown from a secondary supply port which is communicated with a part of pathway in a screw barrel of the kneading extruder, thereby, the fine carbon fibers are mixed to the thermoplastic resin which was thrown in advance and have traveled along the screw barrel of the kneading extruder and comes to its melt state; and the extrusion temperature is set at a temperature condition that the melt flow index of the above mentioned thermoplastic resin under loading of 2. 16 Kg in accordance with the Japanese Industrial Standard K 7210 (JIS K 7210) sets a particular range; and the residence time of the fine carbon fiber-containing resin composition in the kneading extruder and the shearing rate of a screw segment of the kneading extruder to the fine carbon fiber-containing resin composition are adjusted to proper ranges, respectively.

Namely, the invention for solving the above mentioned problems is a method for manufacturing fine carbon fiber-containing resin composition, which comprises throwing fine carbon fibers and a thermoplastic resin into a kneading extruder and kneading them in the extruder to prepare the fine carbon fiber-containing resin composition in which the fine carbon fibers are dispersively blended in the thermoplastic resin, wherein the thermoplastic resin is thrown from a main supply port of the kneading extruder, and the fine carbon fibers are thrown from a secondary supply port which is communicated with a part of pathway in a screw barrel of the kneading extruder so that the fine carbon fibers are mixed to the thermoplastic resin which was thrown in advance and have traveled along the screw barrel of the kneading extruder and comes to its fused state; wherein a cylinder temperature of the kneading extruder is set to a temperature at which the melt flow index of the thermoplastic resin under loading of 2.16 Kg in accordance with the Japanese Industrial Standard K 7210 (JIS K 7210) sets in a range of 10 - 30; and wherein the residence time of the fine carbon fiber-containing resin composition in the kneading extruder and the shearing rate of a screw segment of the kneading extruder to the fine carbon fiber-containing resin composition set in a range of 25 - 100 seconds, and in a range of 10000 - 30000/sec., respectively.
Incidentally, the JIS K 7210 standard is a standard substantially corresponding to ISO 1133:1997.

The present invention also discloses the method for manufacturing fine carbon fiber-containing resin composition, wherein the thermoplastic resin to be used is in the shape of pellets or flakes.

The present invention further discloses the method for manufacturing fine carbon fiber-containing resin composition, wherein the bulk density of the fine carbon fibers to be used is 0.0001 - 0.05g/cm³.

The present invention also discloses the method for manufacturing fine carbon fiber-containing resin composition, wherein the thermoplastic resin comprises at least one member selected from the group consisting of polyvinyl chloride resins, polyolefin resins, polylactic acid resins, polystyrene resins, acrylonitrile-butadiene-styrene (ABS) resins, acrylonitrile - styrene (AS) resins, poly(meth)acrylic resins, polyacrylonitrile resins, saturated polyester resins, ionomer resins, polycarbonate resins, polyamide resins, polyacetal resins, polyphenylene ether resin, modified polyphenylene ether resins, polyarylate resins, polysulfone resins, polyetherimide resins, polyether sulfone resins, polyphenylene sulfide resins, polyether ether ketone resins, polyether ketone resins, polyamide imide resins, thermoplastic polyimide resins, liquid crystal polyester resins, thermoplastic elastomers, and polymer alloys of any two or more polymers mentioned above.

The present invention also discloses the method for manufacturing fine carbon fiber-containing resin composition, wherein the fine carbon fiber-containing resin composition further comprises at least one kind of filling agent selected from the group consisting of metallic fine particles, silica, calcium carbonate, magnesium carbonate, carbon black, carbon fibers, glass fibers and mixtures of any two or more members mentioned above.

### EFFECT OF THE INVENTION

In the method for manufacturing fine carbon fiber-containing resin composition according to the present invention, even when the thermoplastic resin material used is in the shape of pellets, flakes or the like, the fine carbon fibers can be dispersed uniformly in the thermoplastic resin without deteriorating the characteristics of the fine carbon fibers. Therefore, it is possible to provide a resin composition which enjoys an outstanding electric conductivity while the fine carbon fiber content can be a low level. In addition, since fine carbon fiber content necessitated for attaining a prescribed electric conductivity can be a low level, there is no fear that the physical properties of the thermoplastic resin per se would be impaired.

### BRIEF DESCRIPTION OF DRAWING

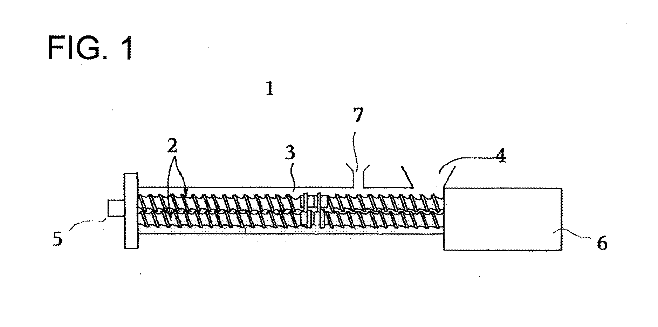

[Fig. 1] is a schematic diagram illustrating the constitution of a kneading extruder capable of being utilized in the method for manufacturing fine carbon fiber-containing resin composition according to the present invention.

### EXPLANATION OF NUMERALS

- 1: Kneading extruder
- 2: Screw segment
- 3: Screw barrel
- 4: Raw material main supply port
- 5: Discharge port
- 6: Screw driving source
- 7: Raw material secondary supply port

### BEST MODE FOR CARRYING OUT THE INVENTION

Now, the present invention will be described in detail with reference to some preferable embodiments which are non-restrictive ones, and disclosed only for the purpose of facilitating the illustration and understanding of the present invention.

In the method for manufacturing fine carbon fiber including resin composition according to the present invention, fine carbon fibers and a thermoplastic resin are thrown into a kneading extruder, and kneaded in the extruder to prepare a fine carbon fiber-containing resin composition.

As the kneading extruder used in the present invention, any apparatus which comprises a monoaxial or multiaxial screw segment(s), a screw barrel which holds the screw segment, a raw material main supply port which is located at upstream of the screw barrel, and a raw material secondary supply port which is located at downstream from the main supply port (usually, on the peripheral of screw barrel), may be adaptable. Among them, biaxial extruders in which two screw segments are arranged in parallel are desirable. Incidentally, as the biaxial extruder, there are a type in which two screw segments rotates along a same direction, and another type in which two screw segments rotates counter to each other, and the former type is preferable.

Fig. 1 is a schematic diagram illustrating the constitution of an embodiment of the kneading extruder capable of being utilized in the manufacturing method according to the present invention. The kneading extruder 1 shown in Fig. 1 is a biaxial extruder in which two screw segments 2 are arranged in parallel in a screw barrel 3, and a raw material mainsupplyport (main hopper port) 4 through which rawmaterial is supplied from outside into the screw barrel is provided at about the upstream edge of the screw barrel 3 (screw driving source 6 side), and a raw material secondary supply port (side feed port) 7 through which a raw material is additionally supplied from outside into the screw barrel is provided at some midpoint on the periphery of the screw barrel. At the other edge of the screw barrel 3, a discharge port 5 through which the kneaded product in the screw barrel is put out to outside is provided.

With respect to the arranged position of the raw material secondary supply port 7, it should be distant from the main supply port 4 at least a distance by which the thermoplastic resin, which was supplied from the main supply port 4, can change into its melt state while it travels, by kneading and conveying of the screw segments 2. Although the distance can not defined generically because it depends on the set temperature condition, screw design of screw pitch, etc., and others, the secondary supply port 7 may be provided, for example, on a position which is distant from the main supply port 4 at a distance corresponding to a screw L/D ratio of about 10 - 15.

Next, according to the present invention, on throwing the fine carbon fibers and a thermoplastic resin into such a kneading extruder and kneading them in the extruder, the thermoplastic resin is thrown from the main supply port 4, while the fine carbon fibers are thrown from the secondary supply port7. Thereby, the carbon fibers thrown from the secondary supply port are mixed to the thermoplastic resin which was thrown in advance and have traveled along the screw barrel of the kneading extruder and comes to its melt state.

Therefore, even if the thermoplastic resin as raw material is supplied in the form of pellets or flakes other than power, it is possible to supply the thermoplastic resin directly to the kneading extruder and treat them therein, without pulverizing it in advance and premixing it with the fine carbon fibers. Thus, the manufacturing method of the present invention has a good manufacturing efficiency.

Further, in the manufacturing method according to the present invention, under the condition that a cylinder (screw barrel) in the kneading extruder is set to a temperature at which the melt flow index (MFI) of the thermoplastic resin under loading of 2.16 Kg in accordance with the Japanese Industrial Standard K 7210 (JIS K 7210) sets in a range of 10 - 30, more preferably in a range of 15 - 25, the kneading extrusion is performed. Incidentally, the value of MFI mentioned above is that of the thermoplastic resin rawmaterial solely, and the thermoplastic resin raw material does not contain a fine carbon fiber (when the thermoplastic resin raw material is a resin composition which includes additives such as plasticizer, stabilizer, etc., in addition to the thermoplastic resin, the MFI is of the resin composition).

In the extrusion temperature range of exceeding 30 of MFI, the dispersion of the fine carbon fibers into the thermoplastic resin becomes inhomogeneous because the melt viscosity of the thermoplastic resin is too low, and thus it is not preferable. In the extrusion temperature range of less than 10 of MFI, a fear that the fine carbon fibers are easily cut off during the kneading extrusion process will arise because the melt viscosity of the thermoplastic resin is too high, and thus it is not also preferable. Although the actual temperature range at which the MFI is in the range of 10 -30 is varied depending on the kind of the thermoplastic resin used, as far as the actual temperature is set in a temperature range capable of satisfying the requirement that MFI sets in the above specified range, it is possible to operate the kneading of the fine carbon fibers and the thermoplastic resin successfully, regardless the kind of the thermoplastic resin used.

To maintain the extrusion temperature to the temperature at which MFI of the thermoplastic resin used sets in the above mentioned specific range can be accomplished not only by regulating the rotation rate of screw segment (s) as mentioned below, but also by providing a water-cooling jacket such as one surrounding the periphery of the screw barrel, or other water-cooling device, if necessary.

In addition to the above mentioned extrusion temperature condition, in the present invention, the residence time of the fine carbon fiber-containing resin composition in the kneading extruder and the shearing rate of a screw segment of the kneading extruder to the fine carbon fiber-containing resin composition are set in a range of 25 - 100 seconds, and in a range of 10000 - 30000/sec., respectively.

The reason that the residence time is set in a range of 25 - 100 seconds is that a residence time of less than 25 seconds will bring an undesirable result that the distribution of the fine carbon fibers in the thermoplastic resins becomes inhomogeneous, and a residence time of exceeding 100 seconds will bring undesirable results that the fear of damaging the fine carbon fibers will be raised as the residence time is extended, as well as a result that a further improvement of the dispersibility will not be expected by the extension of time and thus the manufacturing efficiency will decrease.

The reason that the shearing rate is set in a range of 10000 - 30000/sec. is that the shearing rate of less than 10000/sec. will bring an undesirable result that the distribution of the fine carbon fibers in the thermoplastic resins becomes inhomogeneous, and the shearing rate of exceeding 30000/sec. will bring an undesirable result that a fear that the fine carbon fibers are easily cut off during the kneading extrusion process will arises.

Next, the raw materials used in the method for manufacturing fine carbon-containing thermoplastic resin composition according to the present invention will be described.

As the fine carbon fiber used in the present invention, for instance, single wall carbon nanotubes each consisting of a cylindrically rolled graphene sheet having a diameter of about several nm; multi wall carbon nanotubes each consisting of several cylindrical graphene sheets, which are layered one over another in a direction substantially orthogonal to the axis of the nanotube; and carbon nanohorns each consisting of a single wall carbon nanotube having an conically closed end, etc., can be enumerated, and these may be used singly or in a mixture of any combination of two or more kinds.

Particularly, it is desirable to use carbon nanotubes of which cylindrical graphene sheets have polygonal cross sections in a direction orthogonal to the fiber axis, among the above mentioned fine carbon fibers, from the viewpoint of improving the dispersibility of the fine carbon fibers in the thermoplastic resin of the fine carbon fiber-containing thermoplastic resin composition prepared by the manufacturing method of the present invention. The fact that the carbon nanotube show polygonal figures as the cross sections is a result of annealing at a high temperature, for example, a temperature of not less than 2400 °C after the manufacturing of the fine carbon fibers. Further, by such a heat treatment, the carbon nanotubes can become denser and have fewer defects in both the stacking direction and the surface direction of the graphene sheets that comprise the carbon fibers. Thus, the flexural rigidity of the carbon nanotubes is improved outstandingly. As a result, it is possible to give the nanotubes flexural rigidity and elasticity, namely, a tendency to restore to its original shape after undergoing any deformation. Therefore, such nanotubes can hardly adopt their entangled structures and can disperse easily into the thermoplastic resin. Incidentally, although the carbon nanotube may be a single wall carbon nanotube, nanotube which has graphene sheets layered one over another in a direction substantially orthogonal to the axis of the nanotube is more preferable, from the viewpoint of improving the flexural rigidity.

In addition, it is preferable that the outer diameter of the fine carbon fiber varies along the axial direction of the fiber, from the view point of preventing the carbon fiber from migration in the thermoplastic resin along the axial direction of the fiber, and thus, of improving the dispersion stability.

Further, it is desirable to use fine carbon fibers which have a I_{D}/I_{G} ratio, as determined by Raman spectroscopy, of not more than 0.2, more desirably, not more than 0.1, that is, carbon nanotubes of which graphene sheet have minimum defect, from the view point of improving the electrical conductivity of the fine carbon fibers existing in the thermoplastic resin composition prepared by the manufacturing method of the present invention.

With respect to bulk density of the fine carbon fibers upon using, it is preferable to use fine carbon fibers of which bulk density sets in the range of 0.0001 - 0.05 g/m³, more preferably, in the range of 0.001 - 0.02 g/m³, from the view point of expecting a high dispersibility when kneading with the thermoplastic resin.

Further, in the method for manufacturing the fine carbon fiber-containing thermoplastic resin composition according to the preset invention, the mixing ratio of the fine carbon fibers to the thermoplastic resin is not particularly limited to anywhere, and it may be varied depending on the kind of the thermoplastic resin used, etc. It is desirable, however, to be in the range of 0.1 - 50 % by weight based on the total weight of the composition, more preferably, in the range of 0.3-30% by weight based on the total weight of the composition. This is because, when the content exceeds 50 % by weight, there is a fear that characteristics such as formability, mechanical strength, etc., of the obtained resin composition will deteriorate, and when the content is less than 0.1 % by weight, there is a fear that the imparting effect of electrical conductivity will not be accomplished adequately, both of cases being undesirable.

As the thermoplastic resin used in this invention, although it is not the one especially limited to anywhere, for example, polyvinyl chloride resins; polyolefin resins such as polyethylene, polypropylene, ethylene - propylene copolymer, cyclic polyolefins, etc.; polylactic acid resins; polystyrene resins; acrylonitrile-butadiene-styrene (ABS) resins; acrylonitrile - styrene (AS) resins; poly(meth)acrylic resins such as polymethyl acrylate, polymethyl methacrylate, polyethyl acrylate, polyethyl methacrylate, polyacrylic acid, polymethacrylic acid, etc.; polyacrylonitrile resins; saturated polyester resins such as polybutylene terephthalate, polyethylene terephthalate, etc.; ionomer resins; polycarbonate resins; polyamide resins such as various nylons, etc.; polyacetal resins; polyphenylene ether resin; modified polyphenylene ether resins; polyarylate resins; polysulfone resins; polyether imide resins; polyether sulfone resins; polyphenylene sulfide resins; polyether ether ketone resins; polyether ketone resins; polyamide imide resins; thermoplastic polyimide resins; liquid crystal polyester resins; thermoplastic elastomers; and polymer alloys of any two or more polymers mentioned above, are enumerated. In this invention, these thermoplastic resins can be used singly or in any combination of two or more kinds of them.

In the method of manufacturing the fine carbon fiber-containing thermoplastic resin composition according to the present invention, in addition to the thermoplastic resin and the fine carbon fibers, it is possible to add various additives that can be usually added in a thermoplastic resin composition, for example, antioxidant, thermal stabilizer, weathering resistant agent, mold releasing agent and lubricant, coloring agent such as pigment and dyestuff, plasticizer, antistatic agent, and flame retardant, etc., if necessary. Such additives maybe added to the thermoplastic resin raw material in advance of kneading treatment with the fine carbon fibers, or may be added through the main supply port concurrently with the addition of thermoplastic resin, or may be added through the secondary supply port concurrently with the addition of the fine carbon fibers.

Further, the fine carbon fiber-containing thermoplastic resin composition according to the present invention, may contain other fillers, in addition to the fine carbon fibers as mentioned above, unless the characteristics of the resin composition deteriorate greatly. As such other fillers, for example, metallic fine particles, silica, calcium carbonate, magnesium carbonate, carbon black, carbon fibers, glass fibers, etc. , can be enumerated, and they can be used singly or in any combination of two or more kinds of them.

The fine carbon fiber-containing thermoplastic resin composition obtained by the manufacturing method of the present invention can be used as it is, or used in the molded shape by a conventionally known process. As the molding method, for example, injection moldings, extrusion moldings, compression moldings, etc., are enumerated. Further, as the molded articles, injection molded products, sheets, unoriented films, oriented films, round bars, variant extruded products, etc., are enumerated.

### EXAMPLE

Hereinafter, this invention will be illustrated in detail by practical examples. However, it is to be understood that the following examples are given for illustrative purpose only, and the invention is not limited thereto.

### Referential Example 1

Using the CVD process, fine carbon fibers are synthesized from toluene as a raw material.

The synthesis was carried out in the presence of a mixture of ferrocene and thiophene as the catalyst, and under a reducing atmosphere of hydrogen gas. Toluene and the catalyst were heated to 380 °C along with the hydrogen gas, and then they were supplied to the generation furnace, and underwent thermal decomposition at 1250 °C in order to obtain fine carbon fibers. Then, the synthesized fine carbon fibers were baked at 900 °C in nitrogen gas in order to remove hydrocarbons such as tar, and after that, the fine carbon fibers underwent a high temperature heat treatment at 2600 °C.

It was found that the diameters and fiber lengths of the obtained fine carbon fibers were in a ranged of 15 - 100 nm and in the range of 1 -40 µm, respectively. Further, the bulk density and the Raman I_{D}/I_{G} ratio thereof were found to be 0.0032g/cm³ and 0.090, respectively.

Incidentally, the bulk density and Raman spectroscopic analysis were performed as follows.

### <Measurement of Bulk density>

1 g of powder was placed into a 70 mm caliber transparent cylinder equipped with a distribution plate, then air supply at 0. 1 Mpa of pressure, and 1.3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

### <Raman spectroscopic analysis>

The Raman spectroscopic analysis was performed with the equipment LabRam 800 manufactured by HORIBA JOBIN YVON, S.A.S., and using 514 nm of argon laser.

### Example 1-6

Polycarbonate resin pellets (manufactured by Japan GE plastics, Co., Ltd., LEXAN^{®} HF1110) was thrown from a main hopper of a biaxial extruder of which screw diameter = 35 mm and L/D=28. Then, the fine carbon fibers obtained from Referential Example 1 was thrown from a side feeder of the biaxial extruder at composition ratios shown in Table 1. At extruding temperatures, residence times, and shearing rates shown in Table 1, they were melted and kneaded in order to prepare resin composition pellets.

Incidentally, with respect to the polycarbonate resin used (LEXAN^{®} HF1110), the melt flow indices of this thermoplastic resin, under loading of 2. 16 Kg in accordance with the Japanese Industrial Standard K 7210 (JIS K 7210), were as shown in Table 1.

The resin composition pellets thus prepared were supplied to an injection molder having a mould clamping force of 28T, and under a molding temperature of 300 °C, an injection pressure of 1000kg/cm², and a tool temperature of 100 °C, the resin composition was injected so that tabular molded products of 50mm x 90mm x 3mm were obtained.

The surface resistivity of the obtained tabular molded product was measured using surface resistivity meters (HIRESTA-UP and LORESTA-GP, both manufactured by Mitsubishi Chemical). The obtained results are shown in Table 1.

### Controls 1-6

Except that the polycarbonate resin pellets (LEXAN^{®} HF1110) and the fine carbon fibers obtained from Referential Example 1 were mixed at composition ratios shown in Table 2 and under conditions shown in Table 2, by the same procedures of Examples 1 - 6, resin compositions and further tabular molded products were prepared, and the surface resistivity of the products was determined. The obtainedresults are shown in Table 2.

**[Table 1]**

| | Example1 | Example2 | Example3 | Example4 | Example5 | Example6 |
|---|---|---|---|---|---|---|
| Resin (wt. %) | 95 | 95 | 95 | 95 | 95 | 97 |
| Fine carbon fibers (wt.%) | 5 | 5 | 5 | 5 | 5 | 3 |
| Extruding Temp. (°C) | 260 | 270 | 280 | 270 | 270 | 270 |
| MFI | 13 | 21 | 27.5 | 21 | 21 | 21 |
| Residence time (sec.) | 50 | 50 | 50 | 70 | 40 | 50 |
| Shearing rate (1/sec.) | 22000 | 22000 | 22000 | 11000 | 27000 | 22000 |
| Surface resistivity (Ω/cm²) | 6.2 x 10³ | 2.4 x 10³ | 1.3 x 10⁴ | 6.3 x 10³ | 8.1 x 10³ | 3.5 x 10⁵ |

**[Table 2]**

| | Control1 | Control2 | Control3 | Control4 | Control5 | Control6 |
|---|---|---|---|---|---|---|
| Resin (wt. %) | 95 | 95 | 95 | 95 | 95 | 95 |
| Fine carbon fibers (wt.%) | 5 | 5 | 5 | 5 | 5 | 5 |
| Extruding Temp. (°C) | 240 | 300 | 270 | 270 | 270 | 270 |
| MFI | 5 | 50 | 21 | 21 | 21 | 21 |
| Residence time (sec.) | 50 | 50 | 15 | 110 | 40 | 40 |
| Shearing rate (1/sec.) | 22000 | 22000 | 22000 | 22000 | 9000 | 34000 |
| Surface resistivity (Ω/cm²) | 3.7 x 10⁷ | 6.3 x 10⁷ | 5.4 x 10⁷ | 8.2 x 10⁷ | 2.3 x 10⁸ | 6.1 x 10⁸ |

### Example 7

Except that as the thermoplastic resin polyamide resin (manufactured by TORAY Industries Inc., Amilan CM3007) (Example 7) was used instead of the polycarbonate resin, by the same procedure of Example 2, a resin composition and further tabular molded product were prepared, and the surface resistivity of the product was determined. The obtained results are shown in Table 3.

**[Table 3]**

| | Example7 |
|---|---|
| Name of resin | Polyamide |
| Resin (wt. %) | 95 |
| Fine carbon fibers (wt. %) | 5 |
| Extruding Temp. (°C) | 270 |
| MFI | 21 |
| Residence time (sec.) | 50 |
| Shearing rate (1/sec.) | 22000 |
| Surface resistivity (Ω/cm²) | 3.5 x 10⁴ |

## Claims

1. A method for manufacturing fine carbon fiber-containing resin composition, which comprises throwing fine carbon fibers and a thermoplastic resin into a kneading extruder and kneading them in the extruder to prepare the fine carbon fiber-containing resin composition in which the fine carbon fibers are dispersively blended into the thermoplastic resin,
wherein the thermoplastic resin is thrown from a main supply port of the kneading extruder, and the fine carbon fibers are thrown from a secondary supply port which is communicated with a part of pathway in a screw barrel of the kneading extruder so that the fine carbon fibers are mixed into the thermoplastic resin which was thrown in advance and have traveled along the screw barrel of the kneading extruder and comes to its melt state;
wherein a cylinder temperature of the kneading extruder is set to a temperature at which the melt flow index of the thermoplastic resin under loading of 2.16 Kg in accordance with the Japanese Industrial Standard K 7210 (JIS K 7210) sets in a range of 10 - 30; and
wherein the residence time of the fine carbon fiber-containing resin composition in the kneading extruder and the shearing rate of a screw segment of the kneading extruder to the fine carbon fiber-containing resin composition set in a range of 25 - 100 seconds, and in a range of 10000 - 30000/sec., respectively.

2. The method for manufacturing fine carbon fiber-containing resin composition according to Claim 1,
wherein the thermoplastic resin to be used is in the shape of pellets or flakes.

3. The method for manufacturing fine carbon fiber-containing resin composition according to Claim 1 or 2, wherein the bulk density of the fine carbon fibers to be used is 0.0001 - 0.05g/cm³.

4. The method for manufacturing fine carbon fiber-containing resin composition according to one of Claims 1 - 3, wherein the thermoplastic resin comprises at least one member selected from the group consisting of polyvinyl chloride resins, polyolefin resins, polylactic acid resins, polystyrene resins, acrylonitrile-but adiene-styrene (ABS) resins, acrylonitrile - styrene (AS) resins, poly(meth)acrylic resins, polyacrylonitrile resins, saturated polyester resins, ionomer resins, polycarbonate resins, polyamide resins, polyacetal resins, polyphenylene ether resin, modified polyphenylene ether resins, polyarylate resins,polysulfone resins,polyetherimideresins,polyether sulfone resins,polyphenylene sulfide resins,polyether ether ketone resins, polyether ketone resins, polyamide imide resins, thermoplastic polyimide resins, liquid crystal polyester resins, thermoplastic elastomers, and polymer alloys of any two or more polymers mentioned above.

5. The method for manufacturing fine carbon fiber-containing resin composition according to one of Claims 1 - 4, wherein the fine carbon fiber-containing resin composition further comprises at least one kind of filling agent selected from the group consisting of metallic fine particles, silica, calcium carbonate, magnesium carbonate, carbon black, carbon fibers, glass fibers and mixtures of any two or more members mentioned above.
